# FASCICULE DE BREVET EUROPEEN

(11) **EP 3 559 973 B1**
(45) Date de publication et mention de la délivrance du brevet: **30.08.2023**
(21) Numéro de dépôt: 17882281.3
(22) Date de dépôt: 08.02.2017
(51) Int. Cl.: H01H 71/12, F16B 21/02, H01H 79/00, H02H 7/18, B64G 1/22, H01H 1/36, H01H 1/56, H01H 3/30, H01H 9/10

(54) **DISPOSITIF AUTOPORTÉ D'ACTIVATION POUR COMMUTATEUR ÉLECTROMÉCANIQUE**
SELBSTGETRAGENE AKTIVIERUNGSVORRICHTUNG FÜR EINEN ELEKTROMECHANISCHEN SCHALTER
SELF-SUPPORTED ACTIVATION DEVICE FOR AN ELECTROMECHANICAL SWITCH

(30) Priorité: 22.12.2016 FR 1663257
(43) Date de publication de la demande: 30.10.2019
(73) Titulaire: SAFT, 92300 Lavallois-Perret (FR)
(72) Inventeur: PASQUIER, Eric, 86280 Saint-Benoît (FR); MORILLON, Benoît, 86000 Poitiers (FR)
(74) Mandataire: Hirsch & Associés
(86) Numéro de dépôt international: PCT/FR2017/050288
(87) Numéro de publication internationale: WO 2018/115604

(56) Documents cités:
- FR-A1- 2 902 232
- JP-U- H 055 236
- US-A- 6 073 914
- US-A1- 2001 026 687
- US-A1- 2007 212 189
- US-A1- 2010 005 913

## Description

### DOMAINE TECHNIQUE

L'invention concerne un dispositif autoporté d'activation pour commutateur électromécanique, ainsi qu'un commutateur comportant ce dispositif. Elle trouve notamment une application au contournement ou à l'isolement d'un élément défaillant d'une batterie comportant un ensemble d'éléments électriquement connectés, par exemple une batterie comprenant un ou plusieurs éléments de type lithium-ion telle que les batteries utilisées dans le domaine aéronautique ou spatial.

### ETAT DE LA TECHNIQUE

Dans une batterie contenant un ou plusieurs éléments en série, il peut arriver que l'un des éléments soit défaillant, par exemple qu'il présente une résistance accrue jusqu'à former un circuit ouvert et/ou une forte autodécharge. Dans un tel cas, la poursuite de l'utilisation de la batterie risque d'endommager cet élément défaillant, et dans le cas d'une batterie comprenant plusieurs éléments, d'impacter les éléments sains, et donc de rendre rapidement cette batterie hors d'usage.

En effet, il se produit une surcharge dans le cas d'une résistance accrue de cet élément défaillant, si le courant de charge de cet élément défaillant n'est pas suffisamment dérivé (par exemple par un circuit d'équilibrage en parallèle aux éléments) pour éviter de dépasser le seuil de tension de fin de charge sur cet élément défaillant en attendant que les éléments sains arrivent au seuil de tension de fin de charge pour une charge complète.

Par ailleurs, il se produit une sur-décharge/inversion dans le cas d'une forte autodécharge de cet élément défaillant, si le courant de charge des éléments sains n'est pas suffisamment dérivé (par le circuit d'équilibrage) pour permettre que l'élément défaillant arrive au seuil de tension de fin de charge pour une charge complète.

L'impact d'une poursuite de l'utilisation de la batterie avec un élément défaillant, sur les autres éléments sains de cette batterie, peut donc être direct (la charge des éléments sains devient de plus en plus incomplète) ou indirect via les conséquences liées au comportement de l'élément défaillant (échauffement ; montée en pression ; fonctionnement du coupe-circuit d'élément(s), lorsque la batterie en est équipée, formant un circuit ouvert dans le circuit série de la batterie ; ouverture plus ou moins violente).

Lorsqu'une telle défaillance d'un élément est détectée, on peut remplacer cet élément défaillant par un élément sain, ce qui implique d'accéder à la batterie et d'interrompre pendant une durée plus ou moins longue son utilisation, donc la fourniture d'énergie électrique au circuit auquel il est connecté. Pour réduire la durée de l'interruption de fourniture d'énergie électrique, on peut remplacer la batterie avec l'élément défaillant par une batterie en bon état, le temps de réaliser le remplacement de l'élément défaillant.

Cela implique néanmoins toujours d'accéder à la batterie, ainsi qu'un coût de maintenance important. Le problème de l'accès à la batterie est un problème majeur dans des applications dans lesquelles cette batterie est embarquée dans un dispositif ou système difficilement accessible. C'est le cas notamment dans les applications spatiales, par exemple pour la fourniture d'énergie électrique pour les circuits d'un satellite.

Il est donc important de pouvoir isoler ou contourner cet élément défaillant, afin de pouvoir continuer à utiliser la batterie sans risquer d'endommager les autres éléments.

Dans ce but, on peut utiliser un dispositif de dérivation ou de « by-pass », dans lequel un activateur active un dispositif de commutation permettant d'isoler un des éléments de la batterie lorsqu'une défaillance est détectée sur cet élément.

On connaît par exemple des dispositifs de commutation tels que ceux décrits dans FR 2 902 232 ou dans FR 2 776 434. Un tel dispositif comprend un dispositif d'activation et un équipage mobile formant des moyens de contact comprenant notamment un piston qui peut se déplacer à l'intérieur d'un corps cylindrique entre deux positions distinctes de contact électrique lorsqu'il est activé par le dispositif d'activation. En connectant de façon appropriée un élément d'une batterie multi-éléments aux contacts électriques du dispositif de commutation, on obtient le contournement de l'élément par commutation du dispositif de commutation de l'une vers l'autre des deux positions de contact électrique. La commutation est obtenue par le dispositif d'activation qui, dans la position non commutée, retient le distributeur des moyens de contact dans la première position de contact électrique. Lorsqu'une défaillance au niveau de l'élément concernée est détectée, par un moyen de détection annexe, un courant électrique est envoyé au dispositif d'activation qui libère le piston. Celui-ci se déplace alors vers la deuxième position de contact électrique, permettant ainsi d'obtenir la commutation du dispositif de commutation et donc le contournement de l'élément défaillant.

Le dispositif d'activation, quant à lui, repose sur une bobine dans laquelle sont montés des taquets maintenus par un fil de retenue enroulé autour de la bobine. Le fil de retenue est relié à un capteur de courant. Lorsqu'un courant d'intensité suffisante est reçu par le capteur de courant, le fil de retenue fond tel un fil fusible, libérant ainsi les taquets qui à leur tour libèrent le passage pour le déplacement du piston du dispositif de commutation.

Un des problèmes posés par ce type de dispositif est que les taquets, une fois libérés, tombent dans le corps du dispositif de commutation et restent libres dans ce corps. En outre, ces taquets et/ou la bobine peuvent tourner à l'intérieur du dispositif, ce qui crée un risque d'endommagement du fil fusible.

Par ailleurs, il n'y a pas de contrôle sur l'endroit en lequel le fil fusible peut rompre. En fonction de l'endroit de rupture, la libération des taquets peut être moins efficace, voire rendue impossible notamment si la rupture du fil fusible est telle que le fil de retenue ne peut s'échapper.

Egalement, certaines pièces métalliques, notamment le piston, le fil de retenue, la bobine, les taquets, sont à un potentiel électrique flottant avant et/ou après activation.

### RESUME DE L'INVENTION

Un des buts de l'invention est donc de résoudre notamment les problèmes précités. Ainsi, l'invention a notamment pour objectif de proposer un dispositif de commutation et un dispositif d'activation destiné à un tel dispositif de commutation, permettant d'isoler un élément défaillant d'une batterie à plusieurs éléments, qui soit plus efficace, robuste et fiable.

L'invention a ainsi pour objet, selon un premier aspect, un dispositif d'activation destiné à activer la commutation dans un dispositif de commutation du type présentant des moyens de contact électrique déplaçables entre une première et une deuxième position de contact électrique.

Le dispositif d'activation comprend un capteur de courant, un élément de maintien et au moins deux éléments mobiles solidaires d'une bobine, et est apte à passer, lorsqu'un courant est capté par le capteur de courant, d'une configuration de non activation dans laquelle les éléments mobiles sont maintenus par l'élément de maintien dans une première position destinée à empêcher le déplacement des moyens de contact d'un dispositif de commutation, à une configuration d'activation dans laquelle les éléments mobiles ne sont plus maintenus par l'élément de maintien dans ladite première position et se trouvent dans une deuxième position destinée à permettre le déplacement des moyens de contact d'un dispositif de commutation.

La bobine 10 comprend un espace de passage pour au moins une partie des moyens de contact d'un dispositif de commutation, et les éléments mobiles sont mobiles chacun en rotation autour d'un axe en sorte de dégager, dans ladite deuxième position, ledit espace de passage, tout en restant solidaire de la bobine.

Les deux axes respectifs de rotation des deux éléments mobiles sont formés par des aiguilles solidaires de la bobine.

L'espace de passage est un espace de passage centré sur l'axe central de la bobine, de préférence sensiblement cylindrique, les deux aiguilles sont disposées parallèlement audit espace de passage et symétriquement l'une de l'autre par rapport à ce dit espace de passage, et les deux éléments mobiles prennent la forme de deux taquets de sorte que, lors du passage de la première à la deuxième position, les zones respectives des deux taquets les plus éloignées des aiguilles respectives s'écartent l'une de l'autre pour libérer l'accès audit espace de passage.

Suivant certains modes de réalisation, le dispositif d'activation comprend en outre une ou plusieurs des caractéristiques suivantes, prise(s) isolément ou suivant toutes les combinaisons techniquement possibles :
- la bobine présente une zone d'appui pour chacun des éléments mobiles, et, dans la première position, les éléments mobiles sont maintenus en appui sur les zones d'appui respectives par l'élément de maintien ;
- le capteur de courant comprend un fil d'arrivée de courant, et l'élément de maintien est de type filaire, relié par l'une de ses extrémités à la bobine, enroulé autour des éléments mobiles et relié par son autre extrémité au fil d'arrivée du capteur de courant par un fil fusible dans la première position, de sorte que lorsqu'un courant est capté par le capteur de courant, le fil fusible fond et libère l'extrémité correspondante de l'élément de maintien pour autoriser le passage des éléments mobiles dans la deuxième position ;
- le fil fusible est en configuration de boucle ;
- le fil fusible est relié, de préférence via un élément de connexion, au fil d'arrivée du capteur de courant au travers de la bobine, et un élément électriquement isolant est interposé entre l'ensemble comprenant le fil fusible, éventuellement l'élément de connexion, le fil d'arrivée du capteur de courant d'une part, et la bobine d'autre part ;
L'invention a également pour objet, selon un deuxième aspect, un dispositif de commutation comprenant un corps dans lequel sont logés des moyens de contact électrique déplaçables dans le corps entre une première et une deuxième position de contact électrique.

Le dispositif de commutation comprend un dispositif d'activation tel que présenté plus haut, logé dans le corps 16, en sorte de permettre, lorsque le dispositif d'activation est dans la configuration d'activation, le déplacement des moyens de contact de la première jusqu'à la deuxième position de contact électrique.

Suivant certains modes de réalisation, le dispositif d'activation comprend en outre une ou plusieurs des caractéristiques suivantes, prise(s) isolément ou suivant toutes les combinaisons techniquement possibles :
- le corps présente un axe longitudinal, les moyens de contact s'étendent longitudinalement dans le corps, et le dispositif d'activation est disposé dans le corps en sorte que l'espace de passage pour ladite au moins une partie des moyens de contact s'étende longitudinalement ;
- les moyens de contact comprennent un piston apte à se déplacer longitudinalement dans l'espace de passage pour entraîner les moyens de contact depuis la première jusqu'à la deuxième position de contact électrique ;
- le dispositif comprend des moyens de rappel, tels qu'un ressort, reliés d'une part au corps, de préférence via un élément d'appui tel qu'une rondelle d'appui, et d'autre part aux moyens de contact, lesdits moyens de rappel étant montés en position de repos lorsque les moyens de contact sont dans la deuxième position de contact électrique et en position active lorsque les moyens de contact sont dans la première position de contact électrique, en sorte de permettre le passage automatique des moyens de contact de la première jusqu'à la deuxième position de contact électrique par retour des moyens de rappel de leur position active à leur position de repos ;
- les moyens de contacts comprennent un élément de contact ou distributeur relié au piston par une base électriquement non conductrice, ledit distributeur étant en contact avec une première et une deuxième bornes de contact électrique dans la première position de contact électrique, et en contact avec la deuxième et une troisième bornes de contact électrique dans la deuxième position de contact électrique ;
- l'extrémité du distributeur orientée dans le sens de déplacement des moyens de contact de la première vers la deuxième position de contact électrique, présente un profil radialement réduit par rapport à l'axe longitudinal du corps, en sorte de favoriser l'engagement du distributeur dans la troisième borne en contact avec celle-ci ;
- le dispositif comprend des éléments de contact en matériau déformable électriquement conducteur, disposés respectivement en contact avec les bornes de contact, et en contact avec le distributeur en fonction de son déplacement de la première vers la deuxième position de contact électrique, en sorte de faciliter le contact électrique entre le distributeur et l'une et/ou l'autre des bornes de contact ;
- le diamètre de la portion de la base électriquement non conductrice en vis-à-vis de l'élément de contact en contact avec la borne de contact qui n'est pas en contact avec le distributeur dans la première position de contact, est adapté pour faire en sorte que ladite borne de contact soit autocentrée sur la base électriquement non conductrice et perpendiculaire à l'axe des moyens de contact ;
- le dispositif d'activation est disposé à une extrémité du corps, ladite extrémité étant fermée par un premier couvercle ;
- le premier couvercle est pourvu d'un dégagement dans lequel débouche l'espace de passage dans la bobine du dispositif d'activation, en sorte de permettre le passage de ladite au moins une partie des moyens de contact du dispositif de commutation à travers le dispositif d'activation jusque dans le dégagement ;
- le corps est fermé, en son extrémité opposée à l'extrémité fermée par le premier couvercle, par un deuxième couvercle pourvu d'une cavité, et le distributeur est pourvu, en son extrémité orientée vers le deuxième couvercle, d'un centreur venant se loger dans ladite cavité du couvercle ;
- le centreur est pourvu de moyen de coopération, tel qu'un filetage, apte à permettre la coopération avec un élément de montage pour permettre l'assemblage des bornes de contact sur le distributeur sans endommager les éléments de contact et le déplacement des moyens de contact de la deuxième vers la première position de contact électrique ;
- dans la première position de contact, dans la deuxième position de contact, et au cours du passage de la première à la deuxième position de contact, toutes les pièces métalliques dudit dispositif sont reliées à un potentiel électrique.

L'invention a encore pour objet, selon un troisième aspect, un dispositif d'isolation d'au moins un élément déterminé d'une batterie comportant plusieurs éléments reliés en série, ledit dispositif d'isolation étant destiné à être connecté à ladite batterie.

Le dispositif d'isolation comprend un dispositif de commutation tel que présenté plus haut, en sorte de permettre que, dans la première position de contact électrique du dispositif de commutation, l'élément déterminé soit relié en série avec les autres éléments, et dans la deuxième position de contact électrique du dispositif de commutation, l'élément déterminé soit contourné et ne soit plus relié en série avec les autres éléments.

L'invention a encore pour objet, selon un quatrième aspect, une batterie comprenant plusieurs éléments reliés en série, et pourvue d'un dispositif d'isolation selon la revendication précédente.

Ainsi, l'invention permet d'obtenir le contournement d'un élément défaillant d'une batterie à plusieurs éléments, par un dispositif de commutation robuste, efficace et fiable.

### FIGURES

Les caractéristiques et avantages de l'invention apparaîtront à la lecture de la description qui suit, donnée à titre d'exemple, et non limitative, en référence aux figures suivantes :
- figure 1 : représentation schématique d'un exemple de dispositif de commutation selon l'invention, comprenant un exemple de dispositif d'activation selon l'invention, en coupe longitudinale et avant activation ;
- figure 2 : représentation schématique du dispositif de commutation de la figure 1, en coupe longitudinale et en cours d'activation ;
- figure 3 : représentation schématique du dispositif de commutation de la figure 1, en coupe longitudinale et après activation ;
- figure 4 : représentation schématique d'un exemple de dispositif d'activation selon l'invention, en perspective et avant activation ;
- figure 5 : représentation schématique du dispositif d'activation de la figure 4, en coupe et avant activation ;
- figure 6 : représentation schématique du dispositif d'activation de la figure 4, en coupe et après activation ;
- figure 7 : représentation schématique du dispositif d'activation de la figure 4 installé dans le dispositif de commutation de la figure 1, en coupe et avant activation ;
- figure 8 : représentation schématique du dispositif d'activation de la figure 4 installé dans le dispositif de commutation de la figure 1, selon une autre coupe et avant activation ;
- figure 9 : représentation schématique du dispositif d'activation de la figure 4 installé dans le dispositif de commutation de la figure 1, en coupe et après activation,
- figures 10A, 10B, 10C : schémas électriques d'un exemple de dispositif de commutation selon l'invention au droit d'éléments en série d'une batterie, respectivement avant activation, après activation mais pendant la commutation, et après activation et commutation,
- figure 11 : schéma électrique d'un autre exemple de dispositif de commutation selon l'invention au droit d'éléments en série d'une batterie, après activation mais pendant la commutation.

### EXPOSE DE MODES DE REALISATION

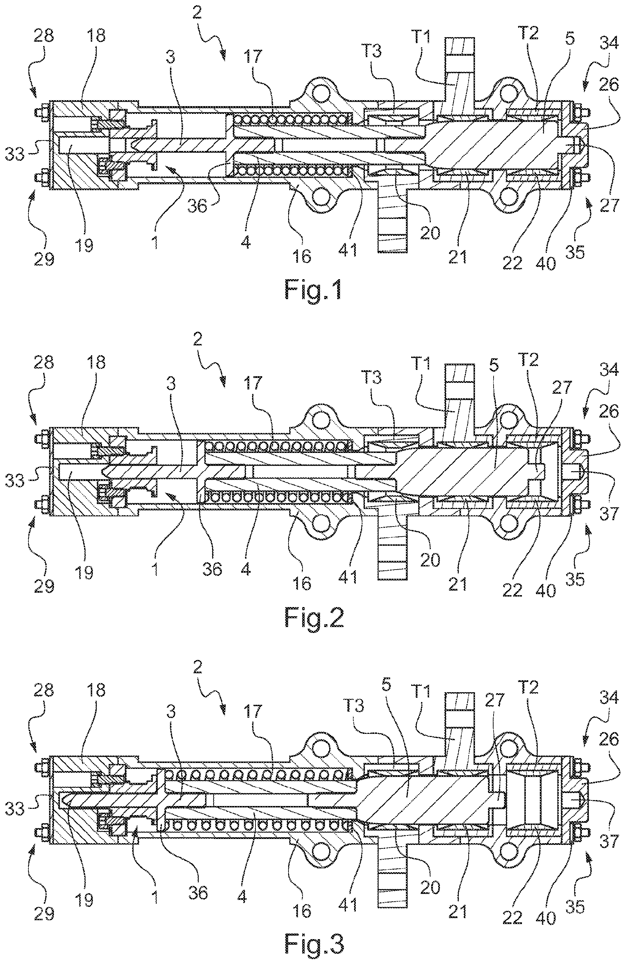

Un exemple de dispositif de commutation 2 selon l'invention, intégrant un dispositif d'activation 1 selon l'invention est représenté sur figures 1 à 3, dans trois positions différentes : position avant activation (figure 1), position intermédiaire (figure 2), position après activation (figure 3).

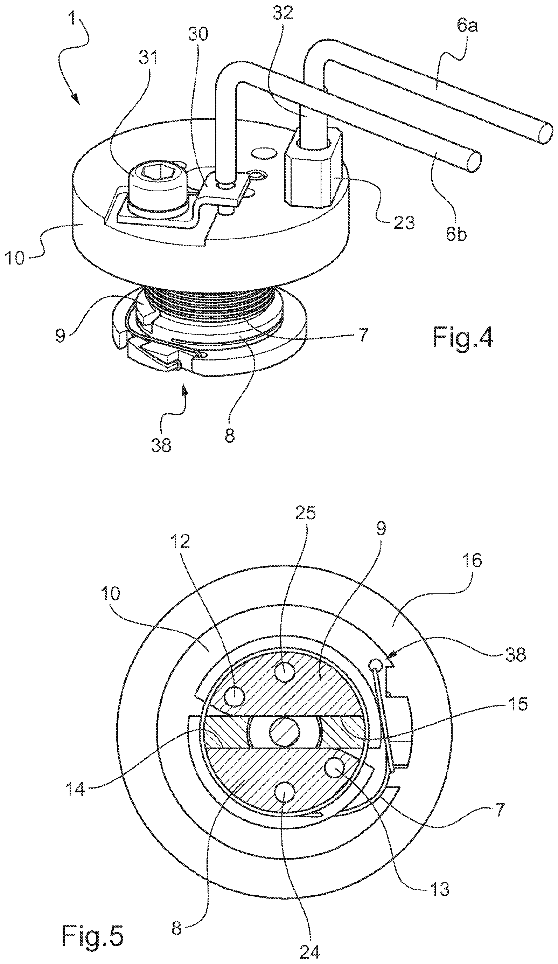

Le dispositif d'activation 1 est lui-même représenté plus en détail sur les figures 4 à 9.

Le dispositif de commutation 2 comprend des moyens de contacts électrique 3, 4, 5 déplaçables entre une première position de contact T2T1 représentée à la figure 1, dans laquelle ces moyens de contact 3, 4, 5 sont en contact avec les deux bornes T2 et T1.

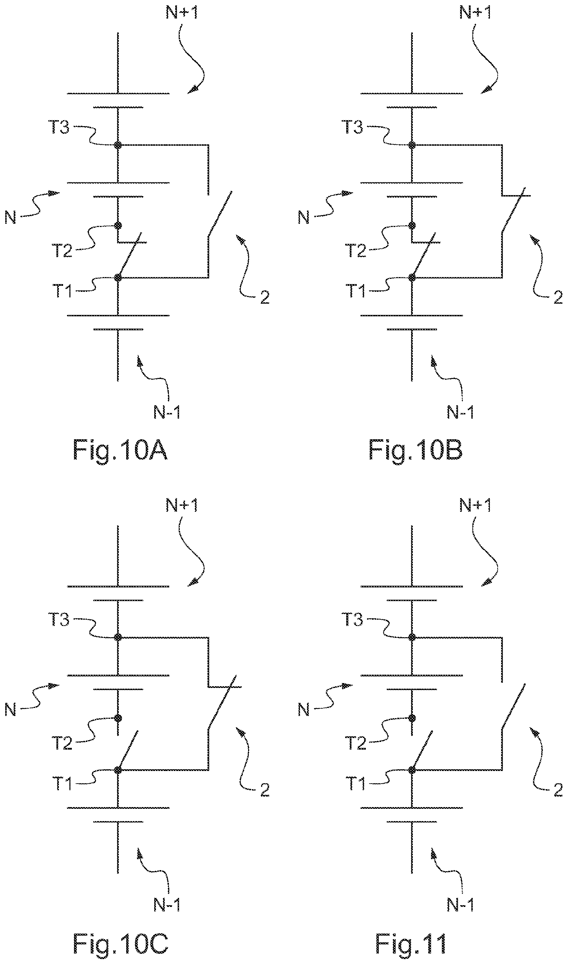

Après activation par le dispositif d'activation 1, les moyens de contact 3, 4, 5 se déplacent vers la borne T3, passant par la position intermédiaire représentée à la figure 2 (correspondant au circuit de la figure 10B) dans laquelle les moyens de contact 3, 4, 5 sont en contact, via un distributeur 5, avec les bornes T1, T2 et T3 (correspondant à une configuration du commutateur dite de « make before break » ou MBB, c'est-à-dire une configuration dans laquelle la connexion T1T3 est fermée avant que la connexion T2T1 soit ouverte, donc dans laquelle les trois bornes de contact T1, T2 et T3 sont électriquement connectées ensemble, ce qui évite tout circuit ouvert dans le circuit série d'une batterie pourvue du dispositif de commutation2), pour arriver à la deuxième position de contact T1T3 représentée à la figure 3, dans laquelle ces moyens de contact 3, 4, 5 sont en contact avec les deux bornes T1 et T3.

En reliant les bornes T1, T2, T3 du dispositif de commutation 1 de manière appropriée aux bornes des éléments d'une batterie multi-éléments, on obtient le maintien d'un élément déterminé relié en série avec les autres éléments lorsque les moyens de contact 3, 4, 5 sont dans la première position de contact T2T1, et le contournement de l'élément déterminé qui n'est plus relié en série avec les autres éléments lorsque les moyens de contact 3, 4, 5 sont dans la deuxième position de contact T1T3.

Par exemple, tel que représenté sur les figures 10A, 10B et 10C, si l'on considère un élément déterminé N relié en série entre deux éléments N-1 et N+1, en reliant la borne T1 du dispositif de commutation 2 à la borne positive de l'élément N-1, la borne T2 du dispositif de commutation 2 à la borne négative de l'élément N, et la borne T3 du dispositif de commutation 2 à la borne positive de l'élément N :
- lorsque la connexion entre les bornes T1 et T2 est réalisée (figures 1 et 10A), c'est-à-dire dans la première position de contact, l'élément N reste connecté en série entre les éléments N-1 et N+1 ;
- pour autant que la connexion entre les bornes T1 et T3 soit réalisée alors que la connexion entre les bornes T1 et T2 ne soit pas encore rompue (figures 2 et 10B), c'est-à-dire dans la position de contact intermédiaire, l'élément N peut être encore connecté en série entre les éléments N-1 et N+1 tout en ayant la possibilité d'avoir la dérivation par T1T3 déjà en place, ceci afin de ne pas occasionner de circuit ouvert sur le circuit série de la batterie ;
- et lorsque la connexion entre les bornes T1 et T3 est réalisée alors que la connexion entre les bornes T1 et T2 n'existe plus (figures 3 et 10C), c'est-à-dire dans la première position de contact, l'élément N n'est plus connecté en série entre les éléments N-1 et N+ 1 (mais reste connecté par sa borne positive à la borne négative de l'élément N+1).

On notera que dans un autre mode de réalisation du dispositif de commutation 2, non représenté sur les figures en tant que tel mais dont le schéma électrique au droit d'éléments en série N-1, N, N+ 1 d'une batterie est représenté en figure 11, il est possible d'obtenir une position intermédiaire de ce dispositif de commutation 2, après activation et pendant commutation, position dite de « break before make » ou BBM, dans laquelle les deux connexions T2T1 et T1T3 sont ouvertes simultanément.

Les considérations ci-dessus s'appliquent également au cas d'une batterie comprenant un seul élément N. Dans ce cas, l'élément N est relié en T1 à l'une des bornes de sortie de la batterie, et en T3 à l'autre des bornes de sortie de la batterie. La commutation pour contourner l'élément N présente alors un intérêt non seulement pour éviter d'endommager cet élément N en cas de défaillance, tel qu'expliqué plus haut, mais également et notamment dans le cas d'une batterie à un seul élément qui serait reliée en série à une ou plusieurs autres batteries comprenant chacune un ou plusieurs autres éléments. Lorsque l'élément unique de la batterie à un seul élément est défaillant, la commutation permet le contournement de cet élément unique défaillant, donc le contournement de la batterie défaillante, sans les risques d'impact sur les éléments des autres batteries tel que présenté plus haut.

Le dispositif de commutation 2 peut être intégré dans un dispositif d'isolation destiné à être connecté à la batterie. Ce dispositif d'isolation pourra être relié au fil d'arrivée 6a du capteur de courant 6a, 6b. Ainsi, l'activation du dispositif de commutation 2 sera obtenue par l'envoi d'un courant d'une intensité déterminée dans le capteur de courant 6a, 6b du dispositif d'activation 1. Le dispositif d'isolation pourra lui-même être déclenché manuellement ou automatiquement via un système de déclenchement du contournement de l'un ou l'autre des éléments de la batterie, auquel il sera relié.

Eventuellement, ce dispositif d'isolation pourra également être relié à un système de détection de défaillance dans l'un ou l'autre des éléments de la batterie, de sorte que lorsqu'une défaillance dans l'un ou l'autre des éléments de la batterie est détectée par le système de détection, un signal est envoyé à un opérateur pour déclenchement manuel du dispositif d'isolation, ou au système de déclenchement pour activation automatique du dispositif d'isolation.

En équipant une batterie multi-éléments d'un tel dispositif d'isolation, on obtient donc la possibilité de prolonger la durée de vie d'une batterie dont l'un des éléments est défaillant, sans intervention manuelle dans la batterie. La surveillance de l'état des éléments peut éventuellement être automatisée, tout comme le déclenchement du contournement d'un élément défaillant.

Le dispositif de commutation 2 comprend un corps 16 en matériau isolant, dans lequel les moyens de contact 3, 4, 5, ainsi que le dispositif d'activation 1 sont logés.

Tel que représenté dans l'exemple des figures 1 à 3, ce corps 16 présente un axe longitudinal et est fermé en ses deux extrémités respectives par deux couvercles 18 et 26. Ces couvercles 18 et 26 sont fixés au corps 16 par des moyens de fixation 28, 29, respectivement 34, 35. Comme représenté sur les figures, deux plaques d'appui 33, 40 peuvent être interposées entre les moyens de fixation 28, 29 et le couvercle 18, respectivement entre les moyens de fixation 34, 35 et le couvercle 26.

Les moyens de contact 3, 4, 5 s'étendent donc longitudinalement à l'intérieur du corps 16, et se déplacent longitudinalement entre les deux positions de contact T2T1 et T1T3.

Les moyens de contact 3, 4, 5 comprennent un piston 3. Ce piston 3 vient en butée contre ou à l'intérieur du dispositif d'activation 1 avant activation du dispositif d'activation 1 (figure 1), pénètre dans un espace de passage longitudinal du dispositif d'activation 1 après activation de celui-ci (figure 2), jusqu'à une position extrême (figure 3) dite de fin de commutation.

Dans l'exemple représenté, le piston 3 est pourvu, à proximité de son extrémité arrière par rapport à sa course après activation du dispositif d'activation 1, d'une extension radiale 36 qui détermine effectivement la position extrême après activation, en venant en butée contre le dispositif d'activation 1.

Des moyens de rappel 17, tels qu'un ressort 17, sont disposés en sorte d'amener automatiquement le piston 3 vers la position extrême lorsque l'espace de passage dans le dispositif d'activation 1 est libéré, donc après activation de ce dispositif d'activation 1. Dans ce but, les moyens de rappel 17, en appui sur un élément de répartition d'effort 41 de type rondelle par exemple, sont reliés d'une part au corps 16, en amont de la course du piston 3, et au piston 3 via l'extension radiale 36 servant de zone d'appui (de poussée), donc aux moyens de contact 3, 4, 5.

Dans l'exemple représenté, les moyens de rappel 17 sont donc en position de repos (ou position non comprimée ou débandée), lorsque les moyens de contact 3, 4, 5 sont dans la deuxième position de contact T1T3, et en position active (ou position de travail, comprimée ou bandée), lorsque les moyens de contact 3, 4, 5 sont dans la première position de contact T2T1.

Ainsi, les moyens de rappel 17 permettent le passage automatique des moyens de contact 3, 4, 5 de la première position de contact T2T1 à la deuxième position de contact T1T3, une fois le dispositif d'activation 1 activé, par retour depuis la position de travail à la position de repos de ces moyens de rappel 17.

Le distributeur 5, faisant office d'élément de contact électrique dans les moyens de contact 3, 4, 5, est relié au piston 3, par l'intermédiaire d'une base non électriquement conductrice 4.

Le distributeur 5 est destiné à venir en contact avec au moins deux des bornes de contact T1, T2, T3 du dispositif de commutation 2. Ainsi, dans la première position de contact T2T1, le distributeur 5 est en contact avec les bornes de contact T1 et T2, réalisant alors la connexion électrique entre ces deux bornes, selon les figures 1 et 10A. Par ailleurs, dans la deuxième position de contact T1T3, le distributeur 5 est en contact avec les bornes de contact T1 et T3, réalisant alors la connexion électrique entre ces deux bornes, selon les figures 3 et 10C.

Comme évoqué plus haut en référence aux figures 2 et 10B, on notera qu'il peut exister une position intermédiaire plaçant le dispositif de commutation en position « make before break » dans laquelle le distributeur 5, après activation et pendant la commutation, peut être en contact avec les bornes de contact T1, T2 et T3, réalisant alors la connexion électrique entre ces trois bornes, et évitant ainsi tout circuit ouvert sur le circuit série de la batterie pendant la commutation.

Comme on peut le voir sur les trois figures 1 à 3, mais plus spécifiquement sur la figure 2, l'extrémité du distributeur 5 du côté du piston, donc orientée dans le sens de déplacement des moyens de contact 3, 4, 5 de la première T2T1 vers la deuxième T1T3 position de contact électrique, présente un profil radialement réduit par rapport à l'axe longitudinal du corps 16. Ce profil facilite l'engagement du distributeur 5 en contact avec la borne de contact T3.

De préférence, un élément de contact 20, 21, 22 en matériau déformable électriquement conducteur, tel qu'une bande à patins, est disposé en contact avec, et à l'intérieur de, chaque borne de contact T3, T1, T2, pour faciliter le contact électrique entre le distributeur 5 et les bornes de contact T3, T1, T2, ainsi que la translation du distributeur 5.

Comme représenté, le corps 16 est fermé en l'une de ses extrémités, en laquelle est disposé le dispositif d'activation 1, par un couvercle 18. Pour permettre le passage du piston 3 jusqu'à la position extrême, après activation du dispositif d'activation 1, un dégagement sous forme d'un alésage 19 dans lequel débouche l'espace de passage dans le dispositif d'activation 1, est prévu dans le couvercle 18.

A l'extrémité opposée du corps 16, le couvercle 26 ferme également ce corps 16. Ce couvercle 26 est pourvu d'une cavité 37 référencée sur les figures 2 et 3, permettant de recevoir un centreur 27 formé dans l'extrémité du distributeur 5 orientée vers le couvercle 26, lorsque les moyens de contact 3, 4, 5 sont dans la première position de contact T2T1.

La coopération mâle-femelle entre le centreur 27 et la cavité 37 dans le couvercle 26 est une variante de réalisation, mais d'autres variantes sont également possibles pour obtenir un centrage équivalent (par exemple une inversion de cette coopération mâle-femelle).

Ce centreur 27 participe à l'alignement des pièces ainsi qu'à la tenue radiale des moyens de contact 3, 4, 5 mobiles. En particulier, le centreur 27 permet de limiter les oscillations radiales lors de sollicitations mécaniques telles que des vibrations ou des chocs. Ceci permet notamment de soulager les éléments de contact 20, 21, 22 qui subissent déjà des efforts radiaux de contact. C'est le cas plus précisément, dans la première position de contact, entre la borne de contact T1, l'élément de contact 21 et le distributeur 5, entre la borne de contact T2, l'élément de contact 22 et le distributeur 5, et éventuellement entre la borne de contact T3, l'élément de contact 20 et la base électriquement non conductrice 4, et dans la deuxième position de contact, entre la borne de contact T1, l'élément de contact 21 et le distributeur 5, et entre la borne de contact T3, l'élément de contact 20 et le distributeur 5. Ceci permet en outre de garantir la résistance de puissance des moyens de contact 3, 4, 5.

Pour faciliter le montage du dispositif de commutation 1, en particulier la mise en position active des moyens de rappel 17, on peut prévoir dans le centreur 27 des moyens de coopération destinés à coopérer avec un élément de montage, de sorte qu'une fois en coopération, on puisse agir sur l'élément de montage pour déplacer les moyens de contact 3, 4, 5 et les amener de la deuxième position de contact T1T3 vers la première position de contact T2T1. Ces moyens de coopération dans le centreur 27 peuvent par exemple consister en un filetage sur le pourtour de ce centreur 27, permettant d'y visser un outil de montage approprié. Cet outil de montage pourra présenter un profil radialement réduit en amont et en aval du sens de déplacement des moyens de contact 3, 4, 5 de la première vers la deuxième position de contact, sensiblement similaire au profil radialement réduit du distributeur 5, facilitant ainsi l'engagement de ce distributeur 5 et son retour sous les bornes de contact T1 et T2.

Il est avantageux d'adapter le diamètre de la portion de la base électriquement non conductrice 4 qui se situe en vis-à-vis de l'élément de contact 20 associé à (donc en contact avec) la borne de contact T3 qui n'est pas en contact avec le distributeur 5 dans la première position de contact, en sorte que cette borne de contact T3 soit autocentrée (assemblage « centré-glissant-portant », le caractère portant permettant d'éviter tout phénomène de rotulage de la borne de contact T3 sous son poids propre dans le logement « à jeu » du corps 16) sur la base électriquement non conductrice 4 d'une part, et perpendiculaire à l'axe des moyens de contact 3, 4, 5 d'autre part.

Ainsi, la présentation et le montage du dispositif de commutation 2 sur une batterie sont facilités et n'impactent pas la configuration de l'ensemble, ce qui permet de garantir le maintien des fonctionnalités électriques (résistance du circuit de puissance) et mécaniques (déplacement du distributeur) du dispositif

Un exemple de dispositif d'activation 1 selon l'invention est représenté plus en détails sur les figures 4 à 9, destiné à être intégré (figure 4), ou intégré (figures 5 à 9), dans un dispositif de commutation 2 tel que représenté sur les figures 1 à 3.

Le dispositif d'activation 1 comprend un capteur de courant 6a, 6b, deux éléments mobiles 8, 9, ou taquets 8, 9 maintenu solidaires d'une bobine 10 par un élément de maintien 7 de type filaire dans l'exemple.

Le capteur de courant 6a, 6b comprend un fil ou câble d'arrivée 6a de courant pénétrant à travers la bobine 10, isolé de celle-ci par l'intermédiaire d'un élément électriquement isolant 23, et relié à l'élément de maintien 7. Ce câble 6a est spécifique à chaque dispositif de commutation équipant une même batterie. Ce capteur de courant 6a, 6b comprend également un fil ou câble de retour 6b connecté électriquement à la bobine 10, par exemple par l'intermédiaire d'une languette conductrice 30 fixée sur la bobine 10 par un moyen de fixation 31. Ce câble 6b peut être commun à tous les dispositifs de commutation équipant une même batterie.

Les deux éléments mobiles 8, 9 sont donc, dans une première configuration représentée sur les figures 4, 5, 7 et 8, maintenus solidaires de la bobine 10, par l'élément de maintien 7 enroulé autour. Précisément, l'élément mobile 8 est en appui contre une zone d'appui 14 de la bobine 10, et l'élément mobile 9 est en appui contre une autre zone d'appui 15 de la bobine 10 Dans cette configuration, il n'existe pas d'espace de passage suffisant pour le piston 3 des moyens de contact 3, 4, 5 du dispositif de commutation 2 des figures 1 à 3. Cette configuration dite de non activation empêche donc le déplacement des moyens de contact 3, 4, 5.

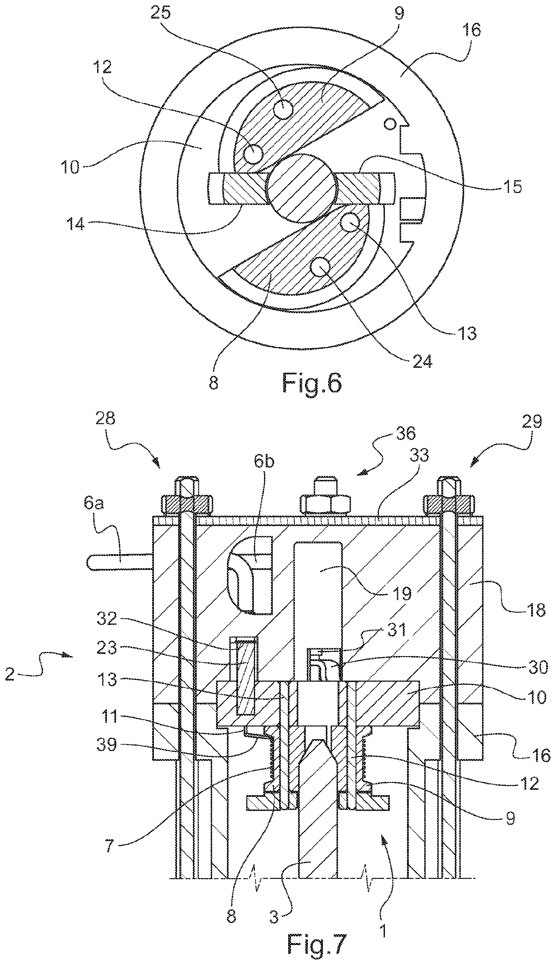

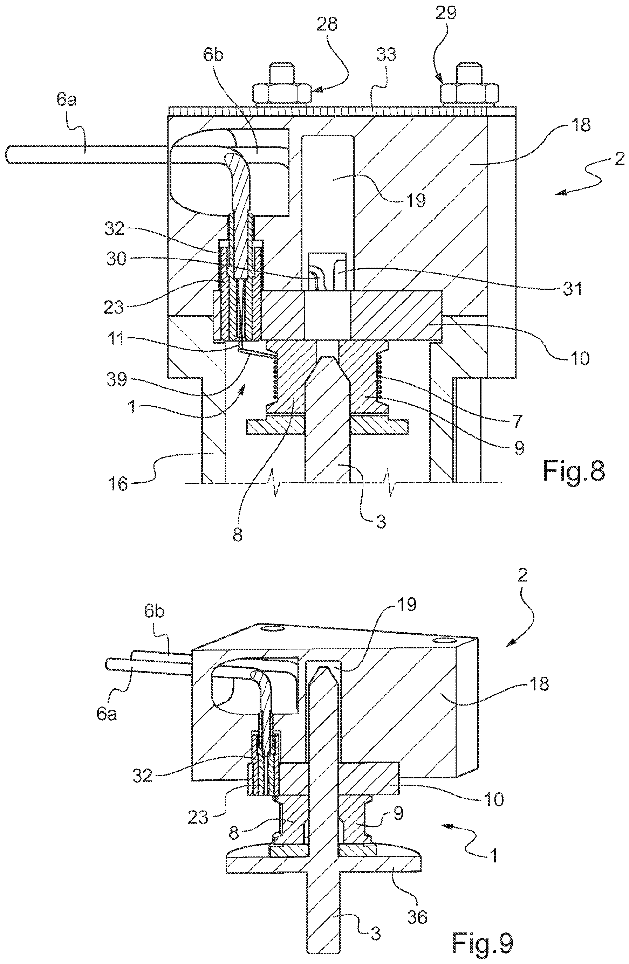

Par ailleurs, dans une deuxième configuration dite d'activation, représentée sur les figures 6 et 9, les éléments mobiles 8, 9 ne sont plus maintenus par l'élément de maintien, et se retrouvent déplacés en rotation chacun autour d'un axe 12, 13 tout en restant solidaires de la bobine 10 via leurs axes de rotation respectifs 12, 13, ce qui libère un espace de passage suffisant pour que le piston 3 des moyens de contact 3, 4, 5 du dispositif de commutation 2 des figures 1 à 3 puisse y pénétrer. Ainsi, cette configuration d'activation permet le déplacement des moyens de contact 3, 4, 5.

Deux aiguilles 12, 13 traversant longitudinalement la bobine 10 assurent la solidarisation des éléments mobiles 8, 9 respectifs avec cette bobine 10, et forment les axes de rotation 12, 13 de ces éléments mobiles 8, 9.

Ainsi, le déplacement en rotation de chacun des éléments mobiles 8, 9 par rapport à leurs aiguilles respectives 12, 13 permet donc l'ouverture d'un passage pour le piston 3 du dispositif de commutation 2, dans la bobine 10 du dispositif d'activation 1.

L'espace de passage en question est un espace de préférence sensiblement cylindrique, plus généralement centré sur l'axe central de la bobine 10. Les deux aiguilles 12, 13 sont disposées parallèlement à cet espace de passage, et symétriquement l'une de l'autre par rapport à ce passage. Ainsi configuré, lors du passage de la première position de contact T2T1 à la deuxième position de contact T1T3, les zones de chacun de éléments mobiles 8, 9 ou taquets 8, 9 les plus éloignées de leurs aiguilles 12, 13 respectives s'écartent l'une de l'autre, permettant de libérer l'espace de passage tout en maintenant les taquets 8, 9 solidaires de la bobine 10.

Comme représenté sur les figures 5 et 6, on peut prévoir dans chacun des éléments mobiles 8, 9 un trou 24, 25 destiné à permettre le maintien des éléments mobiles 8, 9 contre les surfaces d'appui 14, 15 de la bobine 10 lors de l'assemblage du dispositif d'activation 1, même si les éléments mobiles 8, 9 sont déjà maintenus par les aiguilles 12, 13.

Le passage de la configuration de non activation (figure 5) à la configuration d'activation (figure 6) est obtenu par un courant électrique d'une certaine intensité, amené par le fil d'arrivée 6a (ou alternativement par le fil 6b qui peut permettre également d'amener le courant) du capteur de courant 6a, 6b qui est relié à l'une 39 des extrémités de l'élément de maintien 7 de type filaire enroulé autour des taquets 8, 9. L'autre extrémité 38 de l'élément de maintien 7 est reliée à la bobine 10, comme on peut le voir plus précisément sur la figure 5.

Comme on peut le voir plus précisément sur les figures 7 et 8, l'élément de maintien 7 est relié à ce fil d'arrivée 6a du capteur de courant 6a, 6b par l'intermédiaire d'un fil fusible 11, au travers d'un élément de connexion 32, cet élément 32 étant logé dans l'élément isolant 23, ce dernier étant logé à l'intérieur de la bobine 10. Lorsqu'un courant d'une certaine intensité est amené par le fil d'arrivée 6a (ou, alternativement le fil 6b) du capteur de courant 6a, 6b, le fil fusible 11 fond, ce qui libère l'élément de maintien 7 au niveau de son extrémité 39. Ce dernier se déroule pour libérer à son tour les taquets 8, 9 et leur permettre de tourner autour des aiguilles 12, 13, sous la poussée du piston 3 forcé par les moyens de rappel 17, vers la configuration d'activation de la figure 6.

Le fil fusible 11 prend de préférence la forme d'une boucle 11, ce qui permet d'obtenir un bon contrôle de l'endroit en lequel se fil fusible va casser, tout en assurant une bonne tenue mécanique tant que le capteur de courant 6a, 6b n'amène pas le courant de déclenchement, ou d'activation, du largage de l'élément de maintien 7. Ainsi, cette configuration du fil fusible 11 en boucle permet une réalisation ciblée et aisée et constitue un bon compromis entre tenue électrique et mécanique d'une part, et largage efficace de l'élément de maintien 7 au niveau de son extrémité 39 d'autre part.

L'élément isolant 23 et le montage du fil d'arrivée 6a du capteur de courant 6a, 6b via l'élément de connexion 32 au sein de cet élément isolant 23 et de la bobine 10 n'autorise aucun mouvement de l'ensemble fil d'arrivée 6a, élément de connexion 32, élément isolant 23, bobine 10, fil fusible 11. En particulier, la forme de cet élément isolant 23, est adaptée au lamage de la bobine 10 pour éviter sa rotation. Par ailleurs, le collage de l'élément de connexion 32 et sa forme sertie permettent d'éviter la rotation de l'élément de connexion 32 dans l'élément isolant 23.

On évite ainsi d'endommager la boucle du fil fusible 11 retenant l'élément de maintien 7.

En outre, les trous de passage des fils du capteur de courant 6a, 6b dans le couvercle 18 et leur cheminement coudé sensiblement à 90° permettent de garantir à un second niveau la non rotation de ces fils 6a, 6b.

Ainsi, la traction de l'élément de maintien 7 via son extrémité 39 sur la boucle du fil fusible 11 tend à plaquer l'ensemble fil 6a, élément de connexion 32, élément isolant 23 contre la bobine 10.

Par ailleurs, le lamage dans le couvercle 18 recevant et servant de passage au fil 6a du capteur de courant 6a, 6b garantit à un second niveau la localisation axiale de l'ensemble fil 6a, élément de connexion 32, élément isolant 23.

L'élément de maintien 7 est quant à lui mécaniquement retenu par son autre extrémité 38 à la bobine 10. Ainsi, la chaîne électrique (série et parallèle) du dispositif d'activation 1 comprend le fil de d'arrivée 6a et le fil fusible 11 (l'élément de connexion 32 reliant le fil 6a et le fil fusible 11), l'élément de maintien 7, la bobine 10, les taquets 8, 9, les aiguilles 12, 13, la languette conductrice 30 et le fil de retour 6b. Un tel dispositif d'activation 1 est dit « autoporté » ou « auto-suffisant ».

En outre, puisque la boucle du fil fusible 11 est très proche des deux éléments mobiles 8, 9, la distance de la liaison de l'élément de maintien 7 avec la boucle du fil fusible 11 est réduite, ce qui permet de limiter le risque d'interférence de l'extrémité 39, ou « crosse », de l'élément de maintien 7 dans le corps 16 lors du dé-bobinage de cet élément de maintien 7 à sa libération de la boucle du fil fusible 11.

Toutes les pièces métalliques peuvent être ainsi reliées à des potentiels accessibles « non flottants », en l'occurrence :
- les potentiels des fils 6a, 6b du capteur de courant, avant et après activation, pour la rondelle d'appui 41, les moyens de rappel 17, le piston 3, les éléments mobiles 8, 9, les aiguilles 12, 13, la bobine 10, l'élément de maintien 7, le capteur de courant 6b, 6a, l'élément de connexion 32, la languette conductrice 30 (et la vis 31) et le fil fusible 11,
- les potentiels du circuit de puissance à l'interface avec les bornes de contact T1, T2 et T3, avant et après commutation, pour les éléments de contact 20, 21, 22, les bornes de contact T1, T2, T3, et le distributeur 5,
- le potentiel de la masse, par exemple, pour les moyens de fixation 28, 29 et 34, 35, les plaques d'appui 33, 40 servant à la cohésion mécanique de l'ensemble.

La présente description est donnée à titre d'exemple et n'est pas limitative de l'invention, notamment en ce qui concerne la forme des différents éléments du dispositif d'activation 1 et du dispositif de commutation 2.

En particulier, la forme des éléments mobiles 8, 9 n'est pas limitée à celle présentée dans les figures, pour autant que soit permis leur déplacement de la configuration de non activation à la configuration d'activation sans désolidarisation de la bobine 10.

## Revendications

1. Dispositif d'activation (1) destiné à activer la commutation dans un dispositif de commutation (2) du type présentant des moyens de contact (3, 4, 5) électrique déplaçables entre une première (T2T1) et une deuxième (T1T3) position de contact électrique, le dispositif d'activation (1) comprenant un capteur de courant (6a, 6b), un élément de maintien (7) et au moins deux éléments mobiles (8 , 9) solidaires d'une bobine (10), et étant apte à passer, lorsqu'un courant est capté par le capteur de courant (6a, 6b), d'une configuration de non activation dans laquelle les éléments mobiles (8, 9) sont maintenus par l'élément de maintien (7) dans une première position destinée à empêcher le déplacement des moyens de contact (3, 4, 5) d'un dispositif de commutation (2), à une configuration d'activation dans laquelle les éléments mobiles (8, 9) ne sont plus maintenus par l'élément de maintien (7) dans ladite première position et se trouvent dans une deuxième position destinée à permettre le déplacement des moyens de contact (3, 4, 5) d'un dispositif de commutation (2), la bobine (10) comprenant un espace de passage pour au moins une partie (3) des moyens de contact (3, 4, 5) d'un dispositif de commutation (2),
**caractérisé en ce que** les éléments mobiles (8, 9) sont mobiles chacun en rotation autour d'un axe (12, 13) en sorte de dégager, dans ladite deuxième position, ledit espace de passage, tout en restant solidaire de la bobine (10), les deux axes (12, 13) respectifs de rotation des deux éléments mobiles (8, 9) étant formés par des aiguilles (12, 13) solidaires de la bobine (10), l'espace de passage étant un espace de passage centré sur l'axe central de la bobine (10), de préférence sensiblement cylindrique, les deux aiguilles (12, 13) étant disposées parallèlement audit espace de passage et symétriquement l'une de l'autre par rapport à ce dit espace de passage, les deux éléments mobiles (8, 9) prenant la forme de deux taquets (8, 9) de sorte que, lors du passage de la première à la deuxième position, les zones respectives des deux taquets (8, 9) les plus éloignées des aiguilles (12, 13) respectives s'écartent l'une de l'autre pour libérer l'accès audit espace de passage.

2. Dispositif d'activation (1) selon la revendication 1, **caractérisé en ce que** la bobine (10) présente une zone d'appui (14, 15) pour chacun des éléments mobiles (8, 9), et **en ce que**, dans la première position, les éléments mobiles (8, 9) sont maintenus en appui sur les zones d'appui (14, 15) respectives par l'élément de maintien (7).

3. Dispositif d'activation (1) selon l'une quelconque des revendications 1 et 2, **caractérisé en ce que** le capteur de courant (6a, 6b) comprend un fil d'arrivée de courant (6a), et **en ce que** l'élément de maintien (7) est de type filaire, relié par l'une (38) de ses extrémités (38, 39) à la bobine (10), enroulé autour des éléments mobiles (8, 9) et relié par son autre extrémité (39) au fil d'arrivée (6a) du capteur de courant (6a, 6b) par un fil fusible (11) dans la première position, de sorte que lorsqu'un courant est capté par le capteur de courant (6a, 6b), le fil fusible (11) fond et libère l'extrémité correspondante (39) de l'élément de maintien (7) pour autoriser le passage des éléments mobiles (8, 9) dans la deuxième position.

4. Dispositif d'activation (1) selon la revendication 3, **caractérisé en ce que** le fil fusible (11) est en configuration de boucle.

5. Dispositif d'activation (1) selon l'une quelconque des revendications 3 et 4, **caractérisé en ce que** le fil fusible (11) est relié, de préférence via un élément de connexion (32), au fil d'arrivée (6a) du capteur de courant (6a, 6b) au travers de la bobine (10), et **en ce qu'**un élément électriquement isolant (23) est interposé entre l'ensemble comprenant le fil fusible (11), éventuellement l'élément de connexion (32), le fil d'arrivée (6a) du capteur de courant (6a, 6b) d'une part, et la bobine (10) d'autre part.

6. Dispositif de commutation (2) comprenant un corps (16) dans lequel sont logés des moyens de contact (3, 4, 5) électrique déplaçables dans le corps (16) entre une première (T2T1) et une deuxième (T1T3) position de contact électrique, **caractérisé en ce qu'**il comprend un dispositif d'activation (1) selon l'une quelconque des revendications précédentes logé dans le corps (16), en sorte de permettre, lorsque le dispositif d'activation (1) est dans la configuration d'activation, le déplacement des moyens de contact (3, 4, 5) de la première (T2T1) jusqu'à la deuxième (T1T3) position de contact électrique.

7. Dispositif de commutation (2) selon la revendication 6, **caractérisé en ce que** le corps (16) présente un axe longitudinal, les moyens de contact (3, 4, 5) s'étendent longitudinalement dans le corps (16), et **en ce que** le dispositif d'activation (1) est disposé dans le corps (16) en sorte que l'espace de passage pour ladite au moins une partie des moyens de contact (3, 4, 5) s'étende longitudinalement.

8. Dispositif de commutation (2) selon la revendication 7, **caractérisé en ce que** les moyens de contact (3, 4, 5) comprennent un piston (3) apte à se déplacer longitudinalement dans l'espace de passage pour entraîner les moyens de contact (3, 4, 5) depuis la première (T2T1) jusqu'à la deuxième (T1T3) position de contact électrique.

9. Dispositif de commutation (2) selon la revendication 8, **caractérisé en ce qu'**il comprend des moyens de rappel (17), tels qu'un ressort (17), reliés d'une part au corps (16), de préférence via un élément d'appui (41) tel qu'une rondelle d'appui (41), et d'autre part aux moyens de contact (3, 4, 5), montés en position de repos lorsque les moyens de contact (3, 4, 5) sont dans la deuxième (T1T3) position de contact électrique et en position active lorsque les moyens de contact (3, 4, 5) sont dans la première (T2T1) position de contact électrique, en sorte de permettre le passage automatique des moyens de contact (3, 4, 5) de la première (T2T1) jusqu'à la deuxième (T1T3) position de contact électrique par retour des moyens de rappel (17) de leur position active à leur position de repos.

10. Dispositif de commutation (2) selon l'une quelconque des revendications 8 et 9, **caractérisé en ce que** les moyens de contacts (3, 4, 5) comprennent un élément de contact ou distributeur (5) relié au piston (3) par une base électriquement non conductrice (4), ledit distributeur (5) étant en contact avec une première (T2) et une deuxième (T1) bornes de contact électrique dans la première position (T2T1) de contact électrique, et en contact avec la deuxième (T1) et une troisième (T3) bornes de contact électrique dans la deuxième position (T1T3) de contact électrique.

11. Dispositif de commutation (2) selon la revendication 10, **caractérisé en ce que** l'extrémité du distributeur (5) orientée dans le sens de déplacement des moyens de contact (3, 4, 5) de la première (T2T1) vers la deuxième (T1T3) position de contact électrique, présente un profil radialement réduit par rapport à l'axe longitudinal du corps (16), en sorte de favoriser l'engagement du distributeur (5) dans la troisième borne (T3) en contact avec celle-ci.

12. Dispositif de commutation (2) selon l'une quelconque des revendications 10 et 11, **caractérisé en ce qu'**il comprend des éléments de contact (20, 21, 22) en matériau déformable électriquement conducteur, disposés respectivement en contact avec les bornes de contact (T3, T1, T2), et en contact avec le distributeur (5) en fonction de son déplacement de la première (T2T1) vers la deuxième (T1T3) position de contact électrique, en sorte de faciliter le contact électrique entre le distributeur (5) et l'une et/ou l'autre des bornes de contact (T1, T2, T3).

13. Dispositif de commutation (2) selon la revendication 12, **caractérisé en ce que** le diamètre de la portion de la base électriquement non conductrice (4) en vis-à-vis de l'élément de contact (20) en contact avec la borne de contact (T3) qui n'est pas en contact avec le distributeur (5) dans la première position de contact, est adapté pour faire en sorte que ladite borne de contact (T3) soit autocentrée sur la base électriquement non conductrice (4) et perpendiculaire à l'axe des moyens de contact (3, 4, 5), de façon à obtenir un assemblage de type « centré-glissant-portant ».

14. Dispositif de commutation (2) selon l'une quelconque des revendications 6 à 13, **caractérisé en ce que** le dispositif d'activation (1) est disposé à une extrémité du corps (16), ladite extrémité étant fermée par un premier couvercle (18).

15. Dispositif de commutation (2) selon la revendications 14, **caractérisé en ce que** le premier couvercle (18) est pourvu d'un dégagement (19) dans lequel débouche l'espace de passage dans la bobine (10) du dispositif d'activation (1), en sorte de permettre le passage de ladite au moins une partie (3) des moyens de contact (3, 4, 5) du dispositif de commutation (2) à travers le dispositif d'activation (1) jusque dans le dégagement (19).

16. Dispositif de commutation (2) selon l'une quelconque des revendications 14 et 15, **caractérisé en ce que** le corps (16) est fermé, en son extrémité opposée à l'extrémité fermée par le premier couvercle (18), par un deuxième couvercle (26) pourvu d'une cavité, et **en ce que** le distributeur (5) est pourvu, en son extrémité orientée vers le deuxième couvercle (26), d'un centreur (27) venant se loger dans ladite cavité du couvercle (26).

17. Dispositif de commutation (2) selon la revendication 16, **caractérisé en ce que** le centreur (27) est pourvu de moyen de coopération, tel qu'un filetage, apte à permettre la coopération avec un élément de montage pour permettre l'assemblage des bornes de contact (T3, T1, T2) sur le distributeur (5) sans endommager les éléments de contact (20, 21, 22) et le déplacement des moyens de contact (3, 4, 5) de la deuxième (T1T3) vers la première (T2T1) position de contact électrique.

18. Dispositif de commutation (2) selon l'une quelconque des revendications 6 à 17, **caractérisé en ce que** dans la première position de contact, dans la deuxième position de contact, et au cours du passage de la première à la deuxième position de contact, toutes les pièces métalliques dudit dispositif sont reliées à un potentiel électrique.

19. Dispositif d'isolation d'au moins un élément déterminé d'une batterie comportant plusieurs éléments reliés en série, ledit dispositif d'isolation étant destiné à être connecté à ladite batterie, **caractérisé en ce qu'**il comprend un dispositif de commutation (2) selon l'une quelconque des revendications 6 à 18 et **en ce qu'**il est relié au capteur de courant (6a, 6b) du dispositif d'activation (1), en sorte de permettre le passage du dispositif de commutation (2) de la première position (T2T1) de contact électrique, dans laquelle l'élément déterminé est relié en série avec les autres éléments, à la deuxième position (T1T3) de contact électrique, dans laquelle l'élément déterminé est contourné et n'est plus relié en série avec les autres éléments.

20. Batterie comprenant un élément ou plusieurs éléments reliés en série, **caractérisée en ce qu'**elle est pourvue d'un dispositif d'isolation selon la revendication précédente.

## Patentansprüche

1. Eine Betätigungsvorrichtung (1) zum Aktivieren des Schaltens in einem Schaltgerät (2) des Typs mit elektrischen Kontaktmitteln (3, 4, 5), die zwischen einer ersten (T2T1) und einer zweiten (T1T3) elektrischen Kontaktposition bewegbar sind, wobei die Betätigungsvorrichtung (1) einen Stromsensor (6a, 6b), ein Halteelement (7) und mindestens zwei bewegliche Elemente (8, 9) umfasst, die fest mit einer Spule (10) verbunden sind und sich umschalten können wenn ein Strom vom Stromsensor (6a, 6b) erfasst wird aus einer Nichtaktivierungskonfiguration, in der die beweglichen Elemente (8, 9) durch das Halteelement (7) in einer ersten Position gehalten werden, um eine Bewegung der Kontaktmittel (3, 4, 5) des Schaltgeräts (2) in eine Aktivierungskonfiguration, in der die beweglichen Elemente (8, 9) nicht mehr durch das Halteelement (7) in der ersten Position gehalten werden und sich in einer zweiten Position befinden, die eine Lageveränderung der Kontaktmittel (3, 4, 5) des Schaltgeräts (2) ermöglicht, wobei die Spule (10) einen Durchgangsraum für zumindest einen Teil (3) der Kontaktmittel (3, 4, 5) des Schaltgeräts (2) aufweist,
**dadurch gekennzeichnet, dass** die beweglichen Elemente (8, 9) jeweils um eine Achse (12, 13) rotierend bewegbar sind, um, in der zweiten Position, den Durchgangsraum freizugeben und dabei integral zu bleiben mit der Spule (10), wobei die beiden Achsen (12, 13) der beiden beweglichen Teile (8, 9) durch mit der Spule (10) einstückigen Stifte (12, 13) gebildet werden, wobei der Durchgangsraum ein durchgehender Raum, der auf der Mittelachse der Spule (10) zentriert ist und vorzugsweise im Wesentlichen zylindrisch ist, wobei die beiden Stifte (12, 13) parallel zum Durchgangsraum und zueinander symmetrisch in Bezug auf den Durchgangsraum der beiden beweglichen Elemente (8, 9) angeordnet sind und in Form von zwei Maulteilen (8, 9) ausgebildet sind, so dass bei einem Wechsel von der ersten Position in die zweite Position die jeweils am weitesten von den jeweiligen Stiften ( 12, 13) entfernten Bereiche der beiden Maulteile (8, 9) entfernen sich voneinander, um den Zugang zu dem Durchgangsraum freizugeben.

2. Betätigungsvorrichtung (1) nach Anspruch 1, wobei die Spule (10) einen Anlagebereich (14, 15) für jedes der beweglichen Elemente (8, 9) aufweist und dass in der ersten Position die beweglichen Elemente (8, 9) werden durch das Halteelement (7) in Anlage an ihren jeweiligen Anlagebereichen (14, 15) gehalten.

3. Betätigungseinrichtung (1) nach einem der Ansprüche 1 oder 2, **dadurch gekennzeichnet, dass** der Stromsensor (6a, 6b) einen Stromzuführungsdraht (6a) aufweist und dass das Halteelement (7) aus Draht besteht, der mit einem (38) seiner Enden (38, 39) mit der Spule (10) verbunden ist, um die beweglichen Elemente (8, 9) gewickelt ist und mit seinem anderen Ende (39) mit dem Stromzuführungsdraht (6a) des Stromsensors (6a, 6b) verbunden ist durch einen Sicherungsdraht (11) in der ersten Position, so dass, wenn ein Strom vom Stromsensor (6a, 6b) erfasst wird, der Sicherungsdraht (11) schmilzt und das entsprechende Ende (39) des Halteelements (7) löst, um den Durchgang der beweglichen Elemente (8, 9) zu ermöglichen, um die zweite Position einzunehmen.

4. Betätigungseinrichtung nach Anspruch 3, **dadurch gekennzeichnet, dass** der Sicherungsdraht (11) eine Schleifenkonfiguration aufweist.

5. Betätigungseinrichtung (1) nach einem der Ansprüche 3 und 4, **dadurch gekennzeichnet, dass** der Sicherungsdraht (11) vorzugsweise über ein Verbindungsstück (32) mit der Stromversorgungsleitung (6a) des Stromsensors (6a, 6b) verbunden ist durch die Spule (10), und ein elektrisch isolierendes Element (23) ist zwischen einerseits der Baugruppe bestehend aus dem Sicherungsdraht (11), optional dem Verbindungselement (32) und der Stromversorgung angeordnet Draht (6a) des Stromsensors (6a, 6b) und andererseits die Spule (10).

6. Schaltgerät (2) mit einem Körper (16), in dem Kontaktmittel (3, 4, 5) untergebracht sind, die im Körper (16) zwischen einer ersten (T2T1) und einer zweiten (T1T3)) elektrischen Kontaktposition bewegbar sind, **dadurch gekennzeichnet, dass** es eine Betätigungsvorrichtung (1) nach einem der vorhergehenden Ansprüche umfasst, die im Körper (16) untergebracht ist, um, wenn sich die Betätigungsvorrichtung (1) in der Aktivierungskonfiguration befindet, eine Verschiebung des Kontaktmittel (3, 4, 5) von der ersten (T2T1) zur zweiten (T1T3) elektrischen Kontaktposition ermöglicht ist.

7. Schaltgerät (2) nach Anspruch 6, **dadurch gekennzeichnet, dass** der Körper (16) eine Längsachse aufweist, wobei die Kontaktmittel (3, 4, 5) sich längs im Körper (16) erstrecken, und dass die Betätigungseinrichtung (2) so im Körper (16) angeordnet ist, dass sich der Durchgangsraum für den mindestens einen Teil der Kontaktmittel (3, 4, 5) in Längsrichtung erstreckt.

8. Schaltgerät (2) nach Anspruch 7, wobei die Kontaktmittel (3, 4, 5) einen im Durchgangsraum längsbeweglichen Stößel (3) umfassen, um die Kontaktmittel (3, 4, 5) von der ersten (T2T1) zur zweiten (T1T3) elektrischen Kontaktposition zu verschieben.

9. Schaltgerät (2) nach Anspruch 8, **dadurch gekennzeichnet, dass** es elastische Rückstellmittel (17), wie eine Feder (17), aufweist, die einerseits mit dem Körper (16) verbunden sind, vorzugsweise über Kraftverteilungselement (41) wie zum Beispiel ein ringförmiges Kraftverteilungselement (41), und zweitens an die Kontaktmittel (3, 4, 5), wobei die elastischen Rückstellmittel in einer entspannten Position montiert sind, wenn die Kontaktmittel (3, 4, 5) sich in der zweiten elektrischen Kontaktstellung (T1T3) befinden und in einer aktiven Stellung sind, wenn sich die Kontaktmittel (3, 4, 5) in der ersten elektrischen Kontaktstellung (T2T1) befinden, um einen automatischen Kontaktdurchgang der Kontaktmittel (3, 4, 5) zu ermöglichen von der ersten (T2T1) in die zweite (T1T3) elektrische Kontaktposition unter dem Einfluss der elastischen Rückstellmittel (17) von ihrer aktiven Position in ihre entspannte Position.

10. Schaltgerät (2) nach einem der Ansprüche 8 und 9, **dadurch gekennzeichnet, dass** die Kontaktmittel (3, 4, 5) ein Verteilerelement (5) umfassen, das über ein elektrisch nicht leitenden Basis (4) mit dem Stößel (3) verbindet ist, wobei das Verteilerelement (5) in Kontakt mit einem ersten (T2) und einem zweiten (T1) elektrischen Kontaktanschluss in der ersten elektrischen Kontaktposition (T2T1) und in Kontakt mit dem zweiten (T1) und einen dritten (T3) elektrischen Kontaktanschluss in der zweiten elektrischen Kontaktposition (T1T3) steht.

11. Schaltgerät (2) nach Anspruch 10, wobei ein Ende des Verteilerelements (5) in Bewegungsrichtung der (3, 4, 5) vom ersten (T2T1) zum zweiten (T2T1) ausgerichtet ist, ein radial reduziertes Profil in Bezug auf eine Längsachse des Körpers (16) aufweist, um den Eingriff des Verteilerelements (5) mit dem damit in Kontakt stehenden dritten Anschluss (T3) zu fördern.

12. Schaltgerät (2) nach einem der Ansprüche 10 und 11, **dadurch gekennzeichnet, dass** es Kontaktelemente (20, 21, 22) aus elektrisch leitfähigem, verformbarem Material umfasst, die jeweils in Kontakt mit den Kontaktanschlüssen (T3, T1, T2) und in Kontakt mit dem Verteilerelement (5) als Funktion seiner Bewegung von der ersten (T2T1) zur zweiten (T1T3) elektrischen Kontaktposition, um den elektrischen Kontakt zwischen dem Verteilerelement (5) und einem oder der anderen der Kontaktanschlüsse (T1, T2, T3) zu erleichtern.

13. Schaltgerät (2) nach Anspruch 12, wobei der Durchmesser des Abschnitts der elektrisch nicht leitenden Basis (4), der dem Kontaktelement (20) zugewandt ist, in Kontakt mit dem Kontaktanschluss (T3) steht, der, in der ersten Kontaktposition, nicht in Kontakt mit dem Verteilerelement (5) befindet, so ausgelegt ist, dass es bewirkt, dass der Kontaktanschluss (T3) eine selbstzentrierte Position auf der elektrisch nichtleitenden Basis (4) einnimmt, und sich senkrecht zu einer Achse des Kontaktmittels (3, 4, 5) befindet, um eine verschiebbare, zentrierte Anordnung vom Widerlage-Typ zu erhalten.

14. Schaltgerät (2) nach einem der Ansprüche 6 bis 13, **dadurch gekennzeichnet, dass** die Betätigungseinrichtung (1) an einem Ende des Körpers (16) angeordnet ist, wobei dieses Ende durch einen ersten Deckel (18) verschlossen ist.

15. Schaltgerät (2) nach Anspruch 14, **dadurch gekennzeichnet, dass** der erste Deckel (18) mit einem Freiraum (19) versehen ist, in den ein Durchgangsraum in der Spule (10) des Betätigungsgeräts (1) mündet, so dass der mindestens einen Teil (3) der Kontaktmittel (3, 4, 5) des Schaltgeräts (2) durch die Betätigungseinrichtung (1) hindurch bis in den Freiraum (19) gelangen kann.

16. Schaltgerät (2) nach einem der Ansprüche 14 und 15, **dadurch gekennzeichnet, dass** der Körper (16) an seinem Ende, das dem durch den ersten Deckel (18) verschlossenen Ende gegenüberliegt, durch einen zweiten Deckel (26) verschlossen ist, der mit einem Hohlraum versehen ist, und dass das Verteilerelement (5) an seinem dem zweiten Deckel (26) zugewandten Ende mit einer Zentriervorrichtung (27) versehen ist, die in dem Hohlraum des zweiten Deckels (26) untergebracht werden kann.

17. Schaltgerät (2) nach Anspruch 16, **dadurch gekennzeichnet, dass** die Zentriervorrichtung (27) mit Mitteln zum Zusammenwirken, beispielsweise einem Schraubengewinde, versehen ist, die ein Zusammenwirken mit einem Montageelement ermöglichen, um die Montage der Anschlüsse (T3, T1, T2) am Verteilerelement (5) ohne Beschädigung der genannten Kontaktelemente (20, 21, 21, 22) zu ermöglichen und das Bewegen der genannten Kontaktmittel (3, 4, 5) vom zweiten (T1T3) zur ersten (T2T1) elektrischen Kontaktposition.

18. Schaltgerät (2) nach einem der Ansprüche 6 bis 17, **dadurch gekennzeichnet, dass** in der ersten Kontaktstellung, in der zweiten Kontaktstellung und beim Übergang von der ersten in die zweite Kontaktstellung alle metallischen Teile des Geräts sich an ein einziges elektrisches Potenzial befinden.

19. Vorrichtung zum Isolieren mindestens einer bestimmten Zelle einer Batterie, die aus mehreren in Reihe geschalteten Zellen besteht, wobei die Isoliervorrichtung zum Anschluss an die Batterie geeignet ist, **dadurch gekennzeichnet, dass** sie ein Schaltgerät (2) nach einem der Ansprüche 6 bis 18 aufweist, und dass es mit dem Stromsensor (6a, 6b) der Betätigungsvorrichtung verbunden ist, um den Übergang des Schaltgeräts (2) aus einer ersten elektrischen Kontaktposition (T2T1) zu ermöglichen, in der die ermittelte Zelle mit anderen Zellen in Reihe geschaltet wird, bis zu einer zweiten elektrischen Kontaktposition (T1T3)), in der die bestimmte Zelle umgangen wird und nicht mehr mit den anderen Zellen in Reihe geschaltet ist.

20. Batterie bestehend aus einer oder mehreren in Reihe geschalteten Zellen, **dadurch gekennzeichnet, dass** sie mit einer Isolationsvorrichtung nach dem vorhergehenden Anspruch versehen ist.

## Claims

1. An actuation device (1) for activating switching in a switching device (2) of the type having electrical contact means (3, 4, 5) movable between a first (T2T1) and a second (T1T3) electrical contact position, the actuation device (1) comprising a current sensor (6a, 6b), a retaining member (7) and at least two movable members (8, 9) integral with a coil (10), and being capable of changing over, when a current is sensed by the current sensor (6a, 6b), from a non-activation configuration in which the movable members (8, 9) are held by the retaining member (7) in a first position for preventing movement of contact means (3, 4, 5) of the switching device (2), to an activation configuration in which the movable members (8 , 9) are no longer held by the retaining member (7) in said first position and are located in a second position allowing the contact means (3, 4, 5) of the switching device (2) to change position, the coil (10) comprises a through-space for at least a part (3) of the contact means (3, 4, 5) of the switching device (2),
**characterized in that** the movable members (8, 9) are each movable in rotation about an axis (12 , 13) so as to free up, in said second position, said through-space, while remaining integral with the coil (10), the two axes (12, 13) of the two movable members (8, 9) being formed by pins (12, 13) integral with the coil (10), the through-space being a through-space centered on the central axis of the coil (10), preferably substantially cylindrical, **in that** the two pins (12, 13) being arranged parallel to said through-space and mutually symmetrically with respect to said through-space, the two movable members (8, 9) taking the form of two jaw members (8, 9) such that during a changeover from the first position to the second position, the respective regions of the two jaw members (8, 9) furthest from the respective pins (12, 13) move away from each other to free up access to said through-space.

2. The actuation device (1) according to claim 1, wherein the coil (10) has an abutment region (14, 15) for each of the movable members (8, 9), and in that, in the first position, the movable members (8, 9) are maintained in abutment on their respective abutment regions (14, 15) by the retaining member (7).

3. The actuation device (1) according to any one of claims 1 or 2, **characterized in that** the current sensor (6a, 6b) comprises a current-supply wire (6a), and **in that** the retaining member (7) is of a wire type, connected by one (38) of its ends (38, 39) to said coil (10), wound around the movable members (8, 9) and connected by its other end (39) to the current-supply wire (6a) of the current sensor (6a, 6b) by a fuse wire (11) in the first position, such that when a current is sensed by the current sensor (6a, 6b), the fuse wire (11) melts and releases the corresponding end (39) of the retaining member (7) in order to allow the passage of the movable members (8, 9) to adopt the second position.

4. The actuation device according to claim 3, wherein the fuse wire (11) exhibits a loop configuration.

5. The actuation device (1) according to any one of claims 3 and 4, **characterized in that** the fuse wire (11) is connected, preferably via a connecting member (32), to the current-supply wire (6a) of the current sensor (6a, 6b) through the coil (10), and an electrically isolating member (23) is interposed between, firstly, the assembly comprising the fuse wire (11), optionally the connecting member (32), the current-supply wire (6a) of the current sensor (6a, 6b) and, secondly, the coil (10).

6. A switching device (2) comprising a body (16) in which contact means are accommodated (3, 4, 5) movable in the body (16) between a first (T2T1) and a second (T1T3)) electrical contact position, **characterized in that** it comprises an actuation device (1) according to any one of the preceding claims housed in the body (16), so as to enable, when said actuation device (1) is in the activation configuration, displacement of the contact means (3, 4, 5) from the first (T2T1) to the second (T1T3) electrical contact position.

7. The switching device (2) according to claim 6, **characterized in that** the body (16) has a longitudinal axis, the contact means (3, 4, 5) extending longitudinally in the body (16), and **in that** the actuation device (1) is arranged in the body (16) such that the through-space for the at least one part of the contact means (3, 4, 5) extends longitudinally.

8. The switching device (2) according to claim 7, wherein the contact means (3, 4, 5) comprise a plunger (3) able to move longitudinally in the through-space to displace the contact means (3, 4, 5) from the first (T2T1) to the second (T1T3) electrical contact position.

9. The switching device (2) according to claim 8, **characterized in that** it comprises resilient return means (17), such as a spring (17), which are connected, firstly, to the body (16), preferably via a force distribution member (41) such as an annular force distribution member (41), and, secondly, to the contact means (3, 4, 5), the resilient return means being mounted in a relaxed position when the contact means (3, 4, 5) are in the second (T1T3) position of electrical contact and in an active position when the contact means (3, 4 , 5) are in the first (T2T1) electrical contact position, so as to allow automatic passage of the contact means (3, 4, 5) from the first (T2T1) to the second (T1T3) electrical contact position under the influence of the resilient return means (17) from the active position thereof to the relaxed position thereof.

10. The switching device (2) according to any one of claims 8 and 9, **characterized in that** the contact means (3, 4, 5) include a distributor member (5) connected to the plunger (3) by an electrically non-conductive base (4), said distributor member (5) being in contact with a first (T2) and a second (Tl) electrical contact terminals in the first electrical contact position (T2T1), and in contact with the second (Tl) and a third (T3) electrical contact terminals in the second electrical contact position (T1T3).

11. The switching device (2) according to claim 10, wherein an end of said distributor member (5) oriented in the direction of movement of said contact means (3, 4, 5) from the first (T2T1) to the second (T1T3)) electrical contact position, has a radially reduced profile with respect to a longitudinal axis of the body (16), so as to promote engagement of said distributor member (5) with said third terminal (T3) in contact therewith.

12. The switching device (2) according to any one of claims 10 and 11, **characterized in that** it comprises contact elements (20, 21, 22) made of electrically conductive deformable material, arranged respectively in contact with the contact terminals (T3, Tl, T2), and in contact with said distributor member (5) as a function of its movement from the first (T2T1) to the second (T1T3) electrical contact position to facilitate electrical contact between said distributor member (5) and one or the other of said contact terminals (Tl, T2, T3).

13. The switching device (2) according to claim 12, wherein the diameter of the portion of the electrically non-conductive base (4) facing the contact member (20) in contact with the contact terminal (T3) which is not in contact with said distributor member (5) in the first contact position, is adapted to cause said contact terminal (T3) to adopt a self-centered position on the electrically non-conductive base (4) and perpendicular to an axis of said contact means (3, 4, 5), so as to obtain a slidable, centered, abutment-type assembly.

14. The switching device (2) according to any one of claims 6 to 13, **characterized in that** the actuation device (1) is arranged at one end of the body (16), said end being closed by a first cover (18).

15. The switching device (2) according to claims 14, **characterized in that** the first cover (18) is provided with a clearance space (19) into which a through-space in said coil (10) of the actuation device (1) opens, so as to allow said at least one part (3) of the contact means (3, 4, 5) of the switching device (2) to pass through said actuation device (1) right up and into said clearance space (19).

16. The switching device (2) according to any one of claims 14 and 15, **characterized in that** the body (16) is closed, at its end opposite the end closed by the first cover (18), by a second cover (26) provided with a cavity, and **in that** the said distributor member (5) is provided at its end facing the second cover (26), with a centering device (27) which can be accommodated in said cavity of the second cover (26).

17. The switching device (2) according to claim 16, **characterized in that** the centering device (27) is provided with cooperation means, such as a screw thread, capable of enabling co-operation with an assembly member to enable assembly of the contact terminals (T3, Tl, T2) on the distributor member (5) without damaging the said contact elements (20, 21, 22) and the moving of said contact means (3, 4, 5) from the second (T1T3) to the first (T2T1) electrical contact position.

18. The switching device (2) according to any one of claims 6 to 17, **characterized in that**, in the first contact position, in the second contact position, and during the changeover from the first to the second contact position, all the metal parts of said device are connected to one electrical potential.

19. A device for isolating at least one determined cell of a battery which comprises a plurality of cells connected in series, said isolation device being adapted to be connected to said battery, **characterized in that** it comprises a switching device (2) according to any one of claims 6 to 18 and **in that** it is connected to the current sensor (6a, 6b) of said actuation device, so as to allow the switching device (2) to pass from a first electrical contact position (T2T1), in which the determined cell is connected in series with other cells, to a second electrical contact position (T1T3)), in which the determined cell is bypassed and is no longer connected in series with the other cells.

20. A battery comprising one or more cells connected in series, **characterized in that** it is provided with an isolation device according to the preceding claim.
